# EUROPEAN PATENT APPLICATION

(11) **EP 4 411 622 A1**
(43) Date of publication of application: **07.08.2024**
(21) Application number: 22875117.8
(22) Date of filing: 29.09.2022
(51) Int. Cl.: G06Q 40/04

(54) **DIGITAL CURRENCY-BASED TRANSACTION METHOD AND APPARATUS**

(30) Priority: 30.09.2021 CN 202111165698
(71) Applicant: Digital Currency Institute, The People's Bank of China, Beijing 100071 (CN)
(72) Inventor: MU, Changchun, Beijing 100071 (CN); DI, Gang, Beijing 100071 (CN); ZHAO, Xinyu, Beijing 100071 (CN); YAN, Jianli, Beijing 100071 (CN); CUI, Peidong, Beijing 100071 (CN)
(74) Representative: Casalonga
(86) International application number: PCT/CN2022/122850
(87) International publication number: WO 2023/051736

(57) **Abstract**

Provided are a digital currency-based transaction method and apparatus, relating to the technical field of digital currency. A specific implementation includes: establishing a Near Field Communication (NFC) connection with a transaction receiver (S101); exchanging an interaction capability parameter with the transaction receiver by means of the NFC connection, and performing a transaction feature negotiation to obtain transaction features supported by both parties of a transaction (S102); and initiating the transaction according to the transaction features, and completing the transaction with the transaction receiver according to the transaction features (S103). The present disclosure has the following beneficial implications that a quick transaction can be realized, a transaction success rate is improved, and the transaction performance is optimized.

## Description

### Cross-Reference to Related Application

The present disclosure claims priority to Chinese patent application No. 202111165698.9, filed on September 30, 2021 and entitled "Digital Currency-Based Transaction Method and Apparatus", the disclosure of which is hereby incorporated by reference in its entirety or in part.

### Technical Field

The present disclosure relates to the technical field of digital currency, and in particular to a digital currency-based transaction method and apparatus.

### Background

At present, digital currency-based transaction processing is mostly performed by both parties of a transaction through directly initiating a transaction payment. However, since transaction features of digital currency of both parties of the transaction may have a certain difference during the digital currency transaction, it may lead to a transaction failure, limiting the application scenarios of the digital currency.

The transaction features of the digital currency that may be involved in performing the digital currency transaction, include, for example, a digital currency transaction model, an application version, a cryptographic algorithm used, a transaction limit, etc. Currently disclosed digital currency transaction models include a dual offline transaction (both parties of the transaction may perform the transaction without networking), a single offline transaction, and an online transaction. Digital currency applications and cryptographic algorithms used have different versions, and different versions of application instructions and cryptographic algorithms are incompatible with each other. From a security perspective, different transaction limits are set for the digital currency applications in different terminal forms. For a payee and a payer of the transaction, there is no uniform solution on how to quickly select the appropriate transaction model supported by both parties, how to quickly determine whether the payee and the payer can perform a normal transaction, how to quickly determine whether the other party of the transaction exceeds the limit, etc.

### Summary

In view of this, embodiments of the present disclosure provide a digital currency-based transaction method and apparatus.

According to one aspect of the embodiments of the present disclosure, a digital currency-based transaction method is provided.

A digital currency-based transaction method includes the following operations.

A Near Field Communication (NFC) connection is established with a transaction receiver.

An interaction capability parameter is exchanged with the transaction receiver by means of the NFC connection, and a transaction feature negotiation is performed to obtain transaction features supported by both parties of a transaction.

The transaction is initiated according to the transaction features, and the transaction with the transaction receiver is completed according to the transaction features.

According to one or more embodiments of the present disclosure, the operation that the interaction capability parameter is exchanged with the transaction receiver by means of the NFC connection includes the following operations.

Its own interaction capability parameter is sent to the transaction receiver by means of the NFC connection.

The interaction capability parameter sent by the transaction receiver is received.

According to one or more embodiments of the present disclosure, the interaction capability parameter includes at least one of the following:
an application version number, a transaction model, a cryptographic algorithm, a communication mode, a human-computer interface, a wallet type, a terminal form, a networking capability, a transaction amount, and a transaction limit.

According to one or more embodiments of the present disclosure, the operation that the transaction feature negotiation is performed to obtain the transaction features supported by both parties of the transaction includes the following operation.

The transaction feature negotiation is performed according to a preset negotiation rule to obtain the transaction features supported by both parties of the transaction, where the negotiation rule includes the following operations.

It is determined whether a transaction amount exceeds a transaction limit of the transaction receiver.

It is determined whether an application version number and a cryptographic algorithm are matched with an application version number and a cryptographic algorithm of the transaction receiver, wherein application version number matching comprises that application versions of both parties of the transaction are being identical or compatible, and cryptographic algorithm matching comprises that cryptographic algorithms of both parties of the transaction are being identical or compatible.

A transaction model supported by both parties of the transaction is determined according to a terminal form, a networking capability, and a transaction model, as well as the transaction model of the transaction receiver,.

According to one or more embodiments of the present disclosure, the negotiation rule further includes the following operation.

It is checked whether a cumulative transaction amount of offline transactions reaches a limit, and whether a password-free amount of the offline transactions reaches a limit.

According to one or more embodiments of the present disclosure, the method further includes the following operation.

If the transaction feature negotiation fails, both parties of the transaction are notified of the reason for a negotiation failure, and the transaction is terminated.

According to one or more embodiments of the present disclosure, if the reason of the negotiation failure is application version mismatching, both parties of the transaction are prompted to upgrade an application before the transaction.

If the reason of the negotiation failure is not application version mismatching, the transaction is terminated immediately.

According to another aspect of the embodiments of the present disclosure, a digital currency-based transaction apparatus is provided.

A digital currency-based transaction apparatus includes a communication connection establishment module, a transaction feature negotiation module, and a transaction execution module.

The transaction feature negotiation module is configured to establish an NFC connection with a transaction receiver.

The transaction feature negotiation module is configured to exchange an interaction capability parameter with the transaction receiver by means of the NFC connection, and perform a transaction feature negotiation to obtain transaction features supported by both parties of a transaction.

The transaction execution module is configured to initiate the transaction according to the transaction features, and complete the transaction with the transaction receiver according to the transaction features.

According to still another aspect of the embodiments of the present disclosure, an electronic device for a digital currency-based transaction is provided.

An electronic device for a digital currency-based transaction includes: one or more processors; and a storage apparatus, configured to store one or more programs. The one or more programs are executed by the one or more processors to cause the one or more processors to implement the digital currency-based transaction method provided by the embodiments of the present disclosure.

According to yet another aspect of the embodiments of the present disclosure, a computer-readable medium is provided.

A computer program is stored on a computer-readable medium. When executed by a processor, the program implements the digital currency-based transaction method provided by the embodiments of the present disclosure.

Further implications of the above non-conventional alternatives are described below with reference to the specific implementations.

### Brief Description of the Drawings

The drawings are used for a better understanding of the present disclosure, and do not constitute improper limitations to the present disclosure. Herein.
Fig. 1 is a schematic diagram of main steps of a digital currency-based transaction method according to an embodiment of the present disclosure.
Fig. 2 is a schematic diagram of a timing process of a digital currency-based transaction method according to one embodiment of the present disclosure.
Fig. 3 is a schematic diagram of main modules of a digital currency-based transaction apparatus according to an embodiment of the present disclosure.
Fig. 4 is a diagram of an exemplary system architecture in which an embodiment of the present disclosure may be applied.
Fig. 5 is a schematic structural diagram of a computer system suitable for implementing a terminal device or a server according to an embodiment of the present disclosure.

### Detailed Description of the Embodiments

Exemplary embodiments of the present disclosure are described in detail below with reference to the drawings, including various details of the embodiments of the present disclosure to facilitate understanding, and should be regarded as merely exemplary. Thus, those of ordinary skilled in the art shall understand that, variations and modifications may be made on the embodiments described herein, without departing from the scope and spirit of the present disclosure. Similarly, for clarity and conciseness, descriptions of well-known functions and structures are omitted in the following description.

In order to solve the technical problem in the related art, the present disclosure provides a method for realizing a rapid transaction by performing a transaction feature negotiation (performing negotiation and preprocessing on an application version, a transaction model, a transaction amount, a cryptographic algorithm, etc.) between a payee and a payer during a digital currency transaction.

In the embodiments of the present disclosure, a process of performing the digital currency transaction between the payee and the payer mainly includes: establishing an NFC connection between both parties of a transaction, performing a transaction feature negotiation, and performing the transaction according to negotiated transaction features, or terminating the transaction when the transaction features are mismatched.

When performing the feature negotiation, the payee and the payer first exchange interaction capability parameters of both parties, and then negotiate the transaction features supported by both parties, so as to quickly complete the transaction. The interaction capability parameters include, but are not limited to, an application version number, a transaction model, a cryptographic algorithm, a communication mode, a human-machine interface, a wallet type, a terminal form, a networking capability, a transaction amount/transaction limit, etc.

The application version number refers to a version followed by an application supporting digital currency, including a specification version and a cryptocurrency string version.

The transaction module is described as the same type of transaction processes generalized and abstracted by the digital currency, and there are multiple transaction models, such as a double offline transaction, a single offline transaction, and an online transaction.

The cryptographic algorithm refers to a security operation encryption algorithm used in the transaction.

The communication mode refers to a communication mode of transmitting data used between transaction entities.

The human-computer interface refers to an interactive interface between a user and the transaction entity (such as a receipt and payment device), including a key, a touch, a fingerprint collector, etc.

The wallet type refers to a wallet classification defined by the digital currency specification.

The terminal form refers to the form of the transaction entity, such as a mobile terminal (a mobile phone, a pad, etc.), a ubiquitous intelligence terminal (a smart watch, a smart bracelet, etc.), an acceptance terminal (an intelligent POS machine, an ATM machine, an automatic retail cabinet, etc.), etc.

The networking capability refers to a remote communication capability of the transaction entity, such as a 5G network, a world wide web, a mobile communication network, etc.

The transaction amount refers to an amount received and paid for the transaction.

The transaction limit refers to an upper payment limit of the payer and an upper receipt limit of the payee.

The transaction process in the embodiments of the present disclosure mainly includes three steps: first, after a connection is established between the payee and the payer by means of NFC, the payee or the payer initiating the transaction (hereafter collectively referred to as an initiator) transmits its own interaction capability parameter to the other party (hereafter collectively referred to as a receiver); second, the receiver returns its own interaction capability parameter to the initiator, so that both the initiator and the receiver have the interaction capability parameters of both parties; and third, the initiator, according to the interaction capability parameters of both parties, negotiates the transaction features supported by both parties, including but not limited to the transaction model, the cryptographic algorithm, etc. The negotiation rule refers to a rule followed by the negotiation of the interaction capability parameter, which varies according to a service rule and may be flexibly set according to the service rule in practical applications. In a transaction negotiation process, if the application version number is mismatched, the initiator may notify the receiver that the application is upgraded before the transaction, so as to realize an upgrade reminder function. If the transaction model is mismatched, the cryptographic algorithm is mismatched, or the transaction amount exceeds the transaction limit, the transaction is terminated immediately, thereby avoiding redundant operations. The application version matching includes two cases of being identical and compatible (e.g., backward compatible) application versions. Similarly, the cryptographic algorithm matching also includes two cases of being identical and compatible cryptographic algorithms.

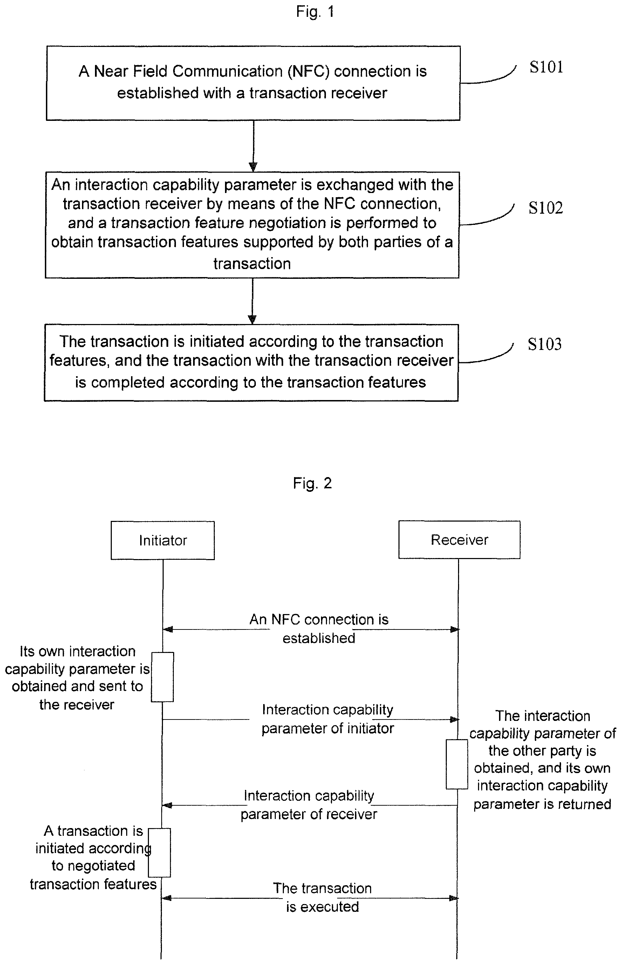

Fig. 1 is a schematic diagram of the main steps of a digital currency-based transaction method according to an embodiment of the present disclosure. As shown in Fig. 1, the digital currency-based transaction method provided by the embodiments of the present disclosure includes the following S101 to S103.

At S101, an NFC connection is established with a transaction receiver. An NFC connection is established between a transaction initiator and the transaction receiver, and the NFC connection includes, but is not limited to, communication modes such as NFC, Bluetooth, and WiFi.

At S102, an interaction capability parameter is exchanged with the transaction receiver by means of the NFC connection, and a transaction feature negotiation is performed to obtain transaction features supported by both parties of the transaction. For example, the operation that the transaction initiator exchanges the interaction capability parameter with the transaction receiver by means of the NFC connection may include: sending its own interaction capability parameter to the transaction receiver by means of the NFC connection; and receiving the interaction capability parameter sent by the transaction receiver. The interaction capability parameter includes at least one of the following: an application version number, a transaction model, a cryptographic algorithm, a communication mode, a human-machine interface, a wallet type, a terminal form, a networking capability, a transaction amount, and a transaction limit.

After both parties of the transaction have exchanged the interaction capability parameters, the transaction initiator and the transaction receiver both have the interaction capability parameters of both parties. The transaction initiator performs the transaction feature negotiation to negotiate the transaction features supported by both parties, including the application version number, the transaction model, and the cryptographic algorithm. According to one embodiment of the present disclosure, the transaction features supported by both parties of the transaction obtained by performing the transaction feature negotiation refer to the transaction features supported by both parties of the transaction obtained by performing the transaction feature negotiation according to a preset negotiation rule, where the preset negotiation rule may include, for example, the following contents.

It is determined whether the transaction amount exceeds the transaction limit of the transaction receiver.

It is determined whether the application version number and the cryptographic algorithm are matched with the application version number and the cryptographic algorithm of the transaction receiver, where application version number matching includes being identical or compatible application versions of both parties of the transaction, and cryptographic algorithm matching includes being identical or compatible cryptographic algorithms of both parties of the transaction.

The transaction model supported by both parties of the transaction is determined according to the terminal form networking capability, and transaction model, as well as the transaction model of the transaction receiver.

According to one embodiment of the present disclosure, when the transaction initiator performs the transaction feature negotiation, the negotiation rule may further include transaction preprocessing functions such as checking whether a cumulative transaction amount of the offline transactions reaches a limit, and whether a password-free amount of the offline transactions reaches a limit. By performing a transaction preprocessing check, the transaction performance may be optimized.

If the transaction initiator performs the transaction feature negotiation successfully, the transaction features supported by both parties of the transaction are obtained, and then the following S103 is performed. If the transaction feature negotiation fails, both parties of the transaction are notified of the reason of the negotiation failure, and the transaction is terminated. If the reason for the negotiation failure is application version mismatching, both parties of the transaction are prompted to upgrade an application before the transaction. If the reason for the negotiation failure is not application version mismatching, the transaction is terminated immediately. For example, if the application version of the transaction initiator is relatively old, the transaction initiator is prompted to upgrade the application before the transaction, and the transaction receiver is prompted that the application version of the other party is relatively old, and asks the other party to upgrade the application before the transaction. If the application version of the transaction receiver is relatively old, the transaction receiver is prompted to upgrade the application before the transaction, and the transaction initiator is prompted that the application version of the other party is relatively old, and asks the other party to upgrade the application before the transaction.

At S103, the transaction is initiated according to the transaction features, and the transaction with the transaction receiver is completed according to the transaction features.

According to the above S101 to S103, the transaction features supported by both parties of the transaction may be obtained by performing the transaction feature negotiation according to the interaction capability parameters of both parties of the transaction, and then the transaction is performed according to the negotiated transaction features, so that a quick transaction is realized, a transaction success rate is improved, and the transaction performance is optimized.

Fig. 2 is a schematic diagram of a timing process of a digital currency-based transaction method according to one embodiment of the present disclosure. As shown in Fig. 2, in one embodiment of the present disclosure, a digital currency-based transaction method mainly includes the following steps.
1. An NFC connection is established between both parties of a transaction, and the NFC connection includes, but is not limited to, communication modes such as NFC, Bluetooth, and WiFi.
2. A wallet application of a transaction initiator obtains its own interaction capability parameter, selects a wallet application of a receiver, and sends a feature negotiation instruction carrying the interaction capability parameter to the receiver. The interaction capability parameter includes, for example, an application version number, a transaction model, a cryptographic algorithm, a communication mode, a human-machine interface, a wallet type, a terminal form, a networking capability, a transaction amount/transaction limit, etc.
3. The transaction receiver receives the feature negotiation instruction and returns its own interaction capability parameter. At this point, both parties of the transaction have the interaction capability parameters of both parties.
4. The transaction initiator negotiates, according to the interaction capability parameters of both parties and a negotiation rule, transaction features supported by both parties of the transaction, including, for example, the transaction model, the cryptographic algorithm, etc. The negotiation rule is that: first, it is determined whether the transaction amount exceeds the transaction limit of the receiver; then, the application version number is matched, and then the cryptographic algorithm is matched; and finally, the transaction model supported by both parties of the transaction is determined according to the terminal form, the networking capability, and the transaction model information, as well as the transaction model information of the transaction receiver. If the negotiation fails, both parties of the transaction are notified of the reason of the failure, and the transaction is terminated. If the reason for the failure is application version mismatching, both parties of the transaction may be prompted to upgrade the application before the transaction. If the reason is anything else, the transaction is terminated immediately, thereby avoiding redundant operations.
5. The transaction initiator initiates the transaction according to the transaction features such as the transaction model and the cryptographic algorithm negotiated by both parties.
6. Both parties of the transaction complete the transaction according to the negotiated transaction features such as the transaction model and the cryptographic algorithm. The transaction model includes, but is not limited to, a double offline transaction, a single offline transaction, an online transaction, etc.

In order to optimize the transaction performance, other transaction preprocessing functions may also be added in a feature negotiation process, such as checking a cumulative transaction amount of the offline transactions reaches a limit, checking the password-free amount of the offline transactions reaches a limit, etc.

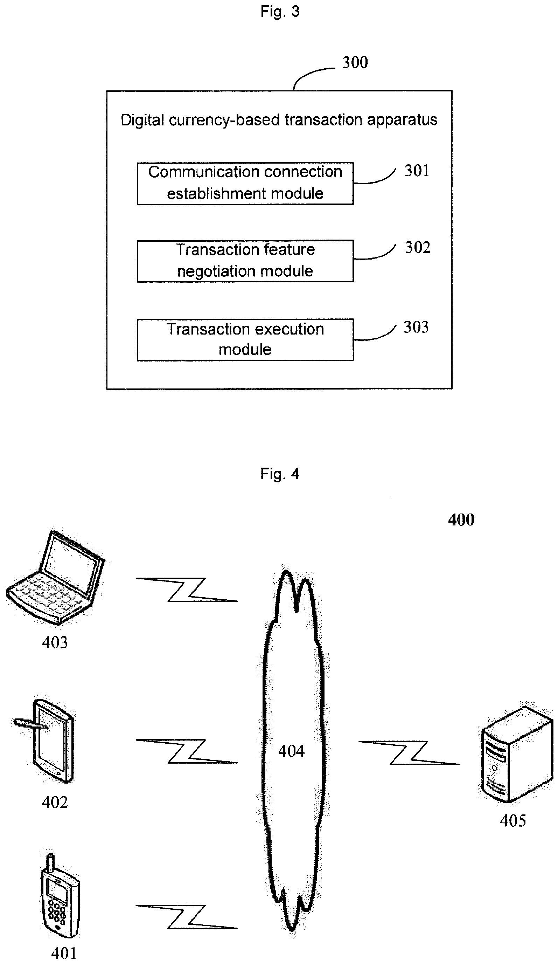

Fig. 3 is a schematic diagram of main modules of a digital currency-based transaction apparatus according to an embodiment of the present disclosure. As shown in Fig. 3, a digital currency-based transaction apparatus 300 in the embodiments of the present disclosure mainly includes a transaction feature negotiation module 301, a transaction feature negotiation module 302, and a transaction execution module 303.

The transaction feature negotiation module 301 is configured to establish an NFC connection with a transaction receiver.

The transaction feature negotiation module 302 is configured to exchange an interaction capability parameter with the transaction receiver by means of the NFC connection, and perform a transaction feature negotiation to obtain transaction features supported by both parties of a transaction.

The transaction execution module 303 is configured to initiate the transaction according to the transaction features, and complete the transaction with the transaction receiver according to the transaction features.

According to one embodiments of the present disclosure, the transaction feature negotiation module 302 may further be configured to:
send its own interaction capability parameter to the transaction receiver by means of the NFC connection; and
receive the interaction capability parameter sent by the transaction receiver.

According to another embodiment of the present disclosure, the interaction capability parameter includes at least one of the following:
an application version number, a transaction model, a cryptographic algorithm, a communication mode, a human-computer interface, a wallet type, a terminal form, a networking capability, a transaction amount, and a transaction limit.

According to still another embodiment of the present disclosure, the transaction feature negotiation module 302 may further be configured to:
perform the transaction feature negotiation according to a preset negotiation rule to obtain the transaction features supported by both parties of the transaction, where the negotiation rule includes the following operations.

It is determined whether the transaction amount exceeds the transaction limit of the transaction receiver.

It is determined whether the application version number and the cryptographic algorithm are matched with the application version number and the cryptographic algorithm of the transaction receiver, where application version number matching comprises that application versions of both parties of the transaction are being identical or compatible, and cryptographic algorithm matching comprises that cryptographic algorithms of both parties of the transaction are being identical or compatible.

The transaction model supported by both parties of the transaction is determined according to the terminal form, the networking capability, and the transaction model, as well as the transaction model of the transaction receiver.

According to still another embodiment of the present disclosure, the negotiation rule further includes the following operation.

It is checked whether a cumulative transaction amount of the offline transactions reaches a limit, and whether a password-free amount of the offline transactions reaches a limit.

According to still another embodiment of the present disclosure, the digital currency-based transaction apparatus 300 further includes a negotiation failure notification module (not shown in the figure), which is configured to:
notify, if the transaction feature negotiation fails, both parties of the transaction of the reason of the negotiation failure, and terminate the transaction.

According to still another embodiment of the present disclosure, if the reason of the negotiation failure is application version mismatching, both parties of the transaction are prompted to upgrade an application and then perform the transaction.

If the reason of the negotiation failure is not application version mismatching, the transaction is terminated immediately.

According to the technical solution of the embodiment of the present disclosure, by means of establishing the NFC connection with the transaction receiver; exchanging the interaction capability parameter with the transaction receiver by means of the NFC connection, and performing the transaction feature negotiation to obtain the transaction features supported by both parties of the transaction; and initiating the transaction according to the transaction features, and completing the transaction with the transaction receiver according to the transaction features, the transaction features supported by both parties of the transaction may be obtained by performing the transaction feature negotiation according to the interaction capability parameters of both parties of the transaction, and then the transaction is performed according to the negotiated transaction features, so that a quick transaction is realized, a transaction success rate is improved, and the transaction performance is optimized.

Fig. 4 shows an exemplary system architecture 400 in which a digital currency-based transaction method or a digital currency-based transaction apparatus according to an embodiment of the present disclosure may be applied.

As shown in Fig. 4, the system architecture 400 may include terminal devices 401, 402 and 403, a network 404, and a server 405. The network 404 is configured to provide media for communication links between the terminal devices 401, 402 and 403, and the server 405. The network 404 may include various connection types, such as wired, wireless communication links, or fiber optic cables.

A user may interact with the server 405 by using the terminal devices 401, 402 and 403 through the network 404 to receive or send messages, etc. Various client applications, such as digital currency applications, digital currency wallet applications, commercial banking applications, instant messaging tools, email clients, social platform software, etc. (examples only) may be installed on the terminal devices 401, 402 and 403.

The terminal devices 401, 402 and 403 may be a variety of electronic devices having a display screen and supporting web browsing, including, but is not limited to, smartphones, tablets, laptops, desktops, etc.

The server 405 may be a server that provides various services, for example, a background management server that provides support for a digital currency transaction request sent by the user through the terminal devices 401, 402 and 403. The background management server may perform processing, such as establishing an NFC connection with a transaction receiver; exchanging an interaction capability parameter with the transaction receiver by means of the NFC connection, and performing a transaction feature negotiation to obtain transaction features supported by both parties of a transaction; and initiating the transaction according to the transaction features, and completing the transaction with the transaction receiver according to the transaction features, on data such as the received digital currency transaction request, and feed back a processing result (such as a digital currency transaction result-only an example) to the terminal device.

It is to be noted that the digital currency-based transaction method provided by the embodiments of the present disclosure is generally executed by the server 405, and accordingly, the digital currency-based transaction apparatus is generally provided in the server 405.

It is to be understood that the number of terminal devices, networks, and servers in Fig. 4 is merely illustrative. There may be any number of terminal devices, networks, and servers according to implementation requirements.

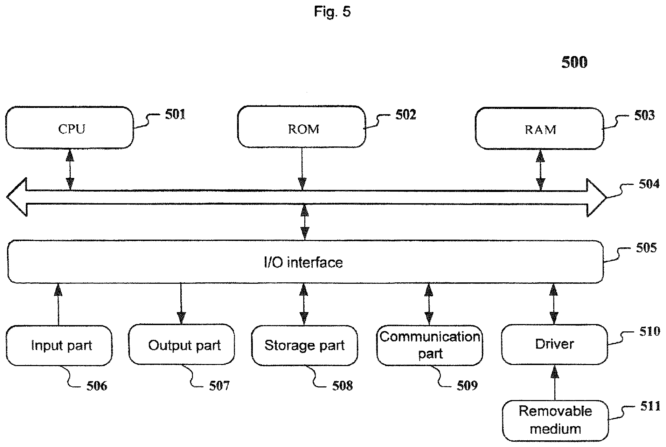

Referring to Fig. 5 below, which shows a schematic structural diagram of a computer system 500 suitable for implementing a terminal device or a server according to an embodiment of the present disclosure. The terminal device or the server shown in Fig. 5 is merely an example and should not impose any restrictions on the functionality and scope of use of the embodiments of the present disclosure.

As shown in Fig. 5, the computer system 500 includes a Central Processing Unit (CPU) 501 that performs various suitable actions and processing according to programs stored in a Read Only Memory (ROM) 502 or loaded from a storage part 508 into a Random Access Memory (RAM) 503. Various programs and data required for the operation of the system 500 are also stored in the RAM 503. The CPU 501, the ROM 502, and the RAM 503 are connected to each other through a bus 504. An Input/Output (I/O) interface 505 is also connected to the bus 504.

The following components are connected to the I/O interface 505: an input part 506 including a keyboard, a mouse, etc.; an output part 507 including a Cathode Ray Tube (CRT), a Liquid Crystal Display (LCD), a speaker, etc.; a storage part 508 including a hard disk, etc.; and a communication part 509 including a network interface card such as a Local Area Network (LAN) card and a modem. The communication part 509 performs communication processing via a network such as Internet. A driver 510 is also connected to the I/O interface 505 as needed. A removable medium 511, such as a magnetic disk, an optical disk, a magneto-optical disk, or a semiconductor memory, is installed on the driver 510 as needed, so that a computer program read therefrom is installed into the storage part 508 as needed.

In particular, the process described above with reference to a flowchart may be implemented as a computer software program according to the embodiments of the present disclosure. For example, the embodiments of the present disclosure include a computer programmable product including a computer program carried on a computer-readable medium, the computer program including a program code for performing the method shown in the flowchart. In such an embodiment, the computer program may be downloaded and installed from the network via the communication part 509, and/or from the removable medium 511. The computer program is executed by the CPU 501 to perform the functions limited in the system of the present disclosure.

It is to be noted that the computer-readable medium shown in the present disclosure may be either a computer-readable signal medium or a computer-readable storage medium or any combination thereof. The computer-readable storage medium may be, but not limited to, for example, an electrical, magnetic, optical, electromagnetic, infrared, or semiconductor system, apparatus or device, or any combination thereof. More specific examples (a non-exhaustive list) of the computer-readable storage medium may include an electrical connector with one or more wires, a portable disk, a hard disk, an RAM, an ROM, an Erasable Programmable ROM (EPROM or a flash memory), an optical fiber, a Compact Disc ROM (CD-ROM), an optical storage device, a magnetic storage device, or any proper combination thereof. In the present disclosure, the computer-readable storage medium may be any physical medium including or storing a program, and the program may be used by or in combination with an instruction execution system, apparatus or device. However, in the present disclosure, the computer-readable signal medium may include a data signal in a baseband or propagated as part of a carrier, a computer-readable program code being carried therein. A plurality of forms may be adopted for the propagated data signal, including, but not limited to, an electromagnetic signal, an optical signal, or any proper combination. The computer-readable signal medium may also be any readable medium except the computer-readable storage medium, and the computer-readable medium may send, propagate, or transmit a program configured to be used by or in combination with an instruction execution system, apparatus, or device The program code in the computer-readable medium may be transmitted with any proper medium, including, but not limited to, radio, a wire, an optical cable, Radio Frequency (RF), etc., or any proper combination thereof.

The flowcharts and block diagrams in the drawings illustrate the architecture, functionality, and operation of systems, methods, and computer program products that may be realized according to various embodiments of the present disclosure. In this regard, each block in the flowchart or block diagram may represent a module, a program segment, or a portion of a code, which includes one or more executable instructions for implementing the specified logic function. It is also to be noted that in some alternative implementations, the functions marked in the blocks may also occur in a different order from those marked in the drawings. For example, two blocks shown in succession may, in fact, be executed substantially in parallel, and sometimes in a reverse order, depending upon the functionality involved. It is also to be noted that each block in the block diagram or flowchart, and a combination of blocks in the block diagram or flowchart may be implemented by a special purpose hardware-based system which performs a specified function or operation, or a combination of special purpose hardware and computer instructions.

The units or modules described in the embodiments of the present disclosure may be implemented by means of software or hardware. The units or modules described may also be provided in a processor, for example, a processor may be described as including a communication connection establishment module, a transaction feature negotiation module, and a transaction execution module. The names of the units or modules do not constitute a limitation on the unit itself in some cases, for example, the communication connection establishment module may also be described as "a module configured to establish an NFC connection with a transaction receiver".

As another aspect, the present disclosure further provides a computer-readable medium, which may be included in the apparatus described in the above embodiments, or may also be present separately and not fitted into the apparatus. The computer-readable medium carries one or more programs, when the one or more programs are executed by one device, the device includes: establishing an NFC connection with a transaction receiver; exchanging an interaction capability parameter with the transaction receiver by means of the NFC connection, and performing a transaction feature negotiation to obtain transaction features supported by both parties of a transaction; and initiating the transaction according to the transaction features, and completing the transaction with the transaction receiver according to the transaction features.

According to the technical solution of the embodiment of the present disclosure, by means of establishing the NFC connection with the transaction receiver; exchanging the interaction capability parameter with the transaction receiver by means of the NFC connection, and performing the transaction feature negotiation to obtain the transaction features supported by both parties of the transaction; and initiating the transaction according to the transaction features, and completing the transaction with the transaction receiver according to the transaction features, the transaction features supported by both parties of the transaction may be obtained by performing the transaction feature negotiation according to the interaction capability parameters of both parties of the transaction, and then the transaction is performed according to the negotiated transaction features, so that a quick transaction is realized, a transaction success rate is improved, and the transaction performance is optimized.

The above specific implementation does not constitute a limitation to the scope of protection of the present disclosure. Those skilled in the art should understand that various modifications, combinations, subcombinations, and substitutions can occur, depending upon design requirements and other factors. Any modifications, equivalent substitutions, improvements, etc. within the spirit and scope of the present disclosure shall be included in the scope of protection of the present disclosure.

## Claims

1. A digital currency-based transaction method, comprising:
establishing a Near Field Communication (NFC) connection with a transaction receiver;
exchanging an interaction capability parameter with the transaction receiver by means of the NFC connection, and performing a transaction feature negotiation to obtain transaction features supported by both parties of a transaction; and
initiating the transaction according the to the transaction features, and completing the transaction with the transaction receiver according to the transaction features.

2. The method as claimed in claim 1, wherein the exchanging an interaction capability parameter with the transaction receiver by means of the NFC connection comprises:
sending its own interaction capability parameter to the transaction receiver by means of the NFC connection; and
receiving an interaction capability parameter sent by the transaction receiver.

3. The method as claimed in claim 1, wherein the interaction capability parameter comprises at least one of the following:
an application version number, a transaction model, a cryptographic algorithm, a communication mode, a human-computer interface, a wallet type, a terminal form, a networking capability, a transaction amount, and a transaction limit.

4. The method as claimed in claim 1 or 3, wherein the performing a transaction feature negotiation to obtain transaction features supported by both parties of a transaction comprises:
performing the transaction feature negotiation according to a preset negotiation rule to obtain the transaction features supported by both parties of the transaction, wherein the negotiation rule comprises:
determining whether a transaction amount exceeds a transaction limit of the transaction receiver;
determining whether an application version number and a cryptographic algorithm are matched with an application version number and a cryptographic algorithm of the transaction receiver, wherein application version number matching comprises that application versions of both parties of the transaction are being identical or compatible, and cryptographic algorithm matching comprises that cryptographic algorithms of both parties of the transaction are being identical or compatible; and
determining a transaction model supported by both parties of the transaction according to a terminal form, a networking capability, and a transaction model, as well as the transaction model of the transaction receiver.

5. The method as claimed in claim 4, wherein the negotiation rule further comprises:
checking whether a cumulative transaction amount of the offline transactions reaches a limit, and whether a password-free amount of the offline transactions reaches a limit.

6. The method as claimed in claim 1, further comprising:
notifying, if the transaction feature negotiation fails, both parties of the transaction of a reason of the negotiation failure, and terminating the transaction.

7. The method as claimed in claim 6, wherein if the reason of the negotiation failure is application version mismatching, both parties of the transaction are prompted to upgrade an application before the transaction; and
if the reason of the negotiation failure is not application version mismatching, the transaction is terminated immediately.

8. A digital currency-based transaction apparatus, comprising:
a communication connection establishment module, configured to establish a Near Field Communication (NFC) connection with a transaction receiver;
a transaction feature negotiation module, configured to exchange an interaction capability parameter with the transaction receiver by means of the NFC connection, and perform a transaction feature negotiation to obtain transaction features supported by both parties of a transaction; and
a transaction execution module, configured to initiate the transaction according to the transaction features, and complete the transaction with the transaction receiver according to the transaction features.

9. An electronic device for a digital currency-based transaction, comprising:
one or more processors; and
a storage apparatus, configured to store one or more programs;
wherein the one or more programs are executed by the one or more processors to cause the one or more processors to implement the method as claimed in any one of claims 1 to 7.

10. A computer-storage medium, on which a computer program is stored, wherein the program implements, when executed by a processor, the method as claimed in any one of claims 1 to 7.
